# EUROPEAN PATENT SPECIFICATION

(11) **EP 0 331 720 B1**
(45) Date of publication and mention of the grant of the patent: **27.10.1993**
(21) Application number: 88908872.0
(22) Date of filing: 12.09.1988
(51) Int. Cl.: G06F 13/00, G06F 13/12, G06F 3/06

(54) **PERIPHERAL CONTROLLER**
PERIPHERE STEUEREINHEIT
UNITE DE COMMANDE DE PERIPHERIQUES

(30) Priority: 21.09.1987 US 99447; 21.09.1987 US 99448
(43) Date of publication of application: 13.09.1989
(73) Proprietor: UNISYS CORPORATION, Blue Bell, PA 19424-0001 (US)
(72) Inventor: GIRIDHAR, Rangaswamy, Parthasarathy, Mission Viejo, CA 92127 (US); REEVE, Jeffrey, Thomas, Fullerton, CA 92631 (US)
(74) Representative: Carmichael, David Andrew Halliday
(86) International application number: US8803091
(87) International publication number: WO8902633

(56) References cited:
- US-A- 4 423 480
- US-A- 4 644 463

## Description

This disclosure relates to the field of peripheral controllers whereby data may be efficiently transferred between a host computer system and a multiplicity of peripheral terminal devices.

This disclosure further relates to the areas of digital circuitry whereby data transfer operations are effected between digital modules and blocks of data are temporarily stored in a memory holding means.

### BACKGROUND OF THE INVENTION

It is the constant endeavor in computer system networks to increase the throughput or rate of data transfer between a host computer and various peripheral devices by use of an efficient I/O controller which is used to manage these data transfer operations.

It has been characteristic of many prior I/O controllers that they could only execute one particular data transfer command cycle to completion before commencement of a second data transfer command cycle operation. In a busy system where multiple peripheral units demand attention from the host computer, there were often delay periods before a requesting peripheral unit could manage to get service of the host or where the host was delayed in accessing the I/O controller to execute data transfers to a selected peripheral unit. By reducing the time delays which prior systems involved, the present I/O controller, designated as the Small Computer System Interface - Data Link Processor, operates to minimize these time delays and increase throughput.

Peripheral controllers of the type to be described herein have had various of their aspects discussed in prior United States patents. Examples of these will be found in U.S. Patent 4,280,193 entitled "Data Link Processor for a Magnetic Tape Data Transfer System"; U.S. Patent 4,613,954 entitled "Block Counter System to Monitor Data Transfers"; and U.S. Patent 4,644,463 entitled "System for Regulating Data Transfer Operations"; U.S. Patent 4,542,457 entitled "Burst Mode Data Block Transfer System"; and U.S. Patent 4,607,348 entitled "Transfer Rate Control System From Tape Peripheral to Buffer Memory of Peripheral Controller".

U.S. Patent 4,423,480 entitled "Buffered Peripheral System With Priority Queue and Preparation For Signal Transfer In Overlapped Operations" discloses a peripheral system having one or more buffered control units connected to a plurality of peripheral devices. Operation times of the devices are marked by the buffer and the controls which overlap device operations, queue device operations in a priority set of queues, and prioritize peripheral system operations. Plural specialized interconnections between each control unit and the devices include a preparatory connection for transfer of preparatory commands to devices, a tag or control connection for device selection, deselection and control and a data-command connection for signal transfers between a selecting control unit and a selected peripheral device.

These patents form a background and a description of many of the elements and operational functions which go to make up the type of peripheral controllers which are called "data link processors".

### SUMMARY OF THE DISCLOSURE

The present disclosure relates to a peripheral controller, often designated as a data link processor (DLP) which provides for the control and execution of data transfers between a main host computer and a multiplicity of peripheral devices, which may be as many as seven peripheral devices. The data link processor enables data transfer operations to occur very rapidly with large blocks of data being transferred from the host computer system to a selected target peripheral device or from a selected target peripheral device to the main host system. Part of the sequence of operations provides for the temporary storage of data being transferred by temporarily holding it in a segmented RAM buffered memory.

According to the present invention there is provided a control system for permitting multiple simultaneous I/O data transfer cycles, in a peripheral controller, to be executed between a host computer which initiates I/O data transfer commands, and multiple numbers (n) of peripheral terminal units, the combination characterised in that it includes;
(a) a segmented buffer memory means having "n+1" addressable page segments and "m" addressable word locations in each of said page segments;
(b) memory address means for addressing page segments and word locations in said segmented buffer memory means, said memory address means including:
   (b1) a peripheral address register, controlled by an arithmetic logic unit for selecting one of said "n+1" page segments and "m" word locations for data being transferred out of said buffer memory means to a selected peripheral terminal unit or for data being transferred from a selected peripheral terminal unit to said buffer memory means;
   (b2) a system address register, controlled by said arithmetic logic unit, for selecting one of said "n+1" page segments and "m" word locations for data being transferred from said host computer to said buffer memory means or for data being transferred from said buffer memory means to said host computer;
   (b3) a scratch pad address register for addressing only the "n+1"th page segment and the "m" word locations therein;
(c) processor means including said arithmetic logic unit for controlling the execution of data transfers and for controlling said peripheral system, and for controlling said scratch pad address register.

The segmented buffered memory provides a separate section for data storage of data which is being transferred either to or from each one of the particular group of peripheral devices.

Since there is only one main host computer to be available for data transfer operations with seven peripheral devices, the main host computer must share its time availability in separate segments of time with each of the seven peripheral devices.

In order to speed the general overall throughput, the preferred embodiment of the present peripheral controller is organized so that a selected peripheral device may disconnect itself from the data link processor while it is doing its own internal housekeeping and searching, and thus make the host system and the data link processor available for talking to and initiating data transfer operations with any other of the peripheral terminal devices.

Thus, during the time when a peripheral device is unable to receive or transmit data, that unusable time period can then be devoted to data transfers and command instructions involved with other of the peripheral devices, thus saving any time wastage for ineffectual purposes.

While many of the older forms of peripheral controllers could only devote a selected period of time to one particular peripheral device for data transfer and after that data transfer operation was completed could only then transfer its attention to another peripheral device for data transfers, the preferred embodiment of the present system permits a simultaneous and parallel set of operations whereby the data link processor permits the host computer to share, in an effective manner, data transfer channels so that rapid data transfer operations can always be occurring with one or another of the peripheral devices while previously initiated peripheral devices are concerned with their internal housekeeping and are not ready to receive or transmit data with the data link processor.

This disclosure also provides the architecture for an addressing control system for a segmented buffer memory which has dedicated portions for each one of a number of peripheral terminal units. The preferred embodiment enables multiple numbers of data transfer cycle operations to be executed concurrently toward the process of completion amongst each of the multiple terminal units since each incomplete initiated data transfer operation will be logged with its status in a separate unit-queue segment of the buffer memory means so that, at some optimum period of time, the incomplete data transfer operation can be located and picked up at the point where it had left off in its incomplete cycle of transfer. Then the transfer of a block of data to and from a selected peripheral can be followed through to final completion.

Since data-in-transit between a host computer and a selected one of multiple peripheral terminal units can be temporarily stored in a dedicated segment of the buffer memory means, the microprocessor of the peripheral-controller can select those optimum time moments to finish off and complete any one of a group of initiated data transfer cycles which had been commenced.

### BRIEF DESCRIPTION OF THE DRAWINGS

FIG. 1 is a block diagram showing the main elements of the small computer systems interface - data link processor.

FIG. 2 is a detailed diagram of the segmented RAM buffer memory used in the data link processor together with a specialized set of address registers.

FIG. 3 is a generalized block diagram of the overall system for data transfer between a host computer and selected peripheral devices.

FIG. 4 is a schematic diagram similar to a flow chart for illustrating how simultaneous data control and data transfer operations can occur among one or more peripheral devices so as to eliminate the ineffectual time periods when no data transfer is possible. FIG. 4A shows the sequential operation of past types of peripheral controllers while FIG. 4B indicates the overlapping simultaneity which is possible under the presently disclosed system.

### GENERAL OVERVIEW

This disclosure describes a particular type of small computer systems interface - data link processor (SCSI-DLP) or peripheral controller which controls information transfer between a host computer system and certain compatible target devices, such peripherals as magnetic disks or streamer tape units.

The SCSI-DLP can be built on one-printed circuit card and used to control the host-DLP communication as well as the communication on a SCSI bus which attaches to seven target devices or peripherals.

The SCSI-DLP is subsequently referred to as the data link processor or DLP. The target devices or peripherals are sometimes referred to as the disk unit or the tape unit.

The particular peripheral controller discussed herein and called the small computer systems interfaces - data link processor is compatible with certain types of host systems which conform to Burroughs mainframes which use a special interface called a message level interface or MLI which uses a specialized protocol for communications between the main host computer system and the data link processor.

The data link processor provides the necessary logic and control to communicate with the host system via the message level interface and also to communicate with the remote devices or peripherals via the SCSI interface. The DLP can be made to communicate with a maximum of seven peripheral target devices by means of the SCSI bus.

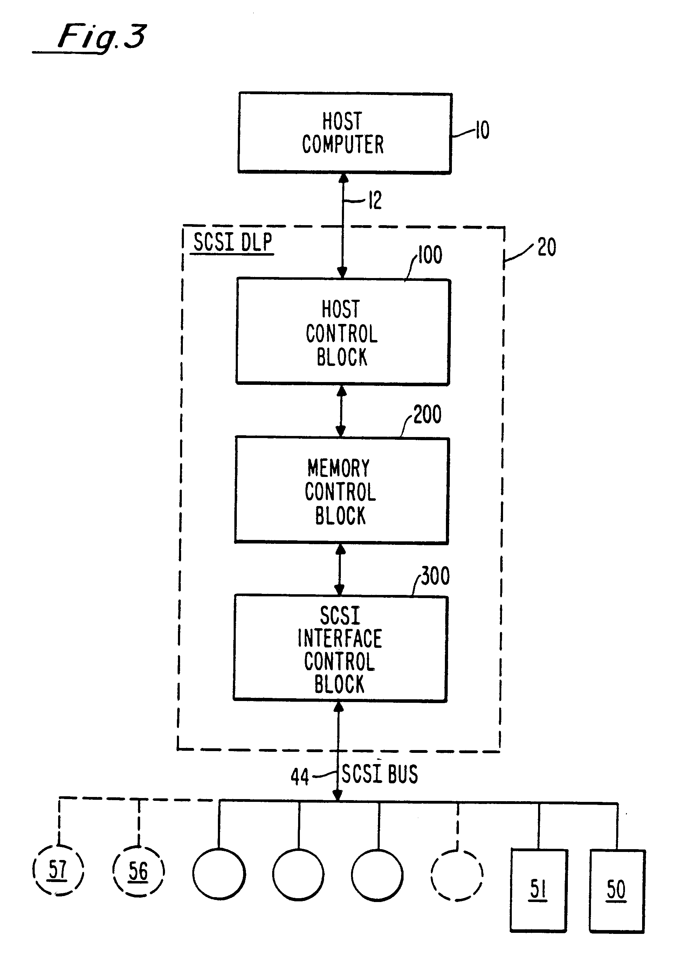

As described in previous patents involving these types of data link processors, the data link processor acts upon I/O descriptors (instructional commands) sent to it from the host computer system. Thus, as seen in FIG. 3, the host computer 10 may provide I/O descriptors to the data link processor 20. The data link processor (DLP) interprets the operation specified by the OP code of the I/O descriptor and performs the operation by issuing one or more commands to the terminal device. At the completion of the operation, the DLP 20 generates a resultant descriptor which is returned to the host computer 10 in order to indicate the completion/incompletion or status of that particular data transfer operation.

The data link processor 20 is a multiple descriptor unit which queues one I/O descriptor for each terminal unit. Each time the host system 10 disconnects from the data link processor 20, the data link processor will begin processing its queue in a sequential manner, beginning with a device sequentially following the last device which had been processed to operate as a circular queue.

The basics of operation of these type data link processors have been described in certain prior patents involving similar types of data transfer operations. One example of these prior publications is U.S. Patent 4,280,193 entitled "Data Link Processor for Magnetic Tape Data Transfer System" which described one type of peripheral controller or data link processor for controlling data transfer operations. Another prior patent was U.S. Patent 4,644,463 entitled "System for Regulating Data Transfer Operations" which further described a similar type of data link processor and the use of peripheral address registers and system address registers for controlling the data transfer operations between a main host computer and a peripheral device. These patents, which are all commonly owned by the same assignee, are included herein by reference in this disclosure, which is also owned by the same assignee.

Three-Port Memory Scheme: The particular memory architecture involved here gives the SCSI-DLP a three-port memory arrangement consisting of eight pages of 1024 bytes per page (one kilobyte), each of which pages is addressable by three different memory address registers. This provides for an efficient operation whereby it allows data transfers to take place in any one of pages 0-6 via the S register and the P register (address registers), while the status of any transfer can be updated in page 7 (the eighth segment of the buffer memory 24) with the use of a scratch pad (SPAD 30) address register acting independent of the S and the P registers.

A considerable feature of this architectural implementation is that up to seven separate data transfers can be in progress at any given time without having to flush and empty the entire buffer memory of data before having to start the next data transfer operation to/from the host. Because of this arrangement, a considerably higher level of data throughput is made possible.

To initiate an operation, the host computer 10 sends the DLP 20 an I/O descriptor and a descriptor link which identifies the particular operation which was instructed. The I/O descriptor itself specifies the operation to be performed.

After reception of the I/O descriptor link, the DLP 20 will make a transition to one of the following message level interface "states" with respect to the host computer 10:
RESULT DESCRIPTOR: This state transition indicates that the data link processor is immediately returning a result descriptor to the host to indicate completion of some cycle, incomplete cycle or some error that was detected.
DISCONNECT: This state transition indicates that the data link processor cannot accept any more operations at this time and that the I/O descriptor and the descriptor link were received by the DLP without parity errors.
IDLE: This state transition indicates that the data link processor can accept another legal operational command at this time and that the previous I/O descriptor and the descriptor link were received by the DLP without parity errors.

Upon completion of a commanded operation, the DLP 20 constructs a result descriptor from information supplied by the peripheral device as well as internal flags within the data link processor. This information is returned by the DLP to the host computer 10.

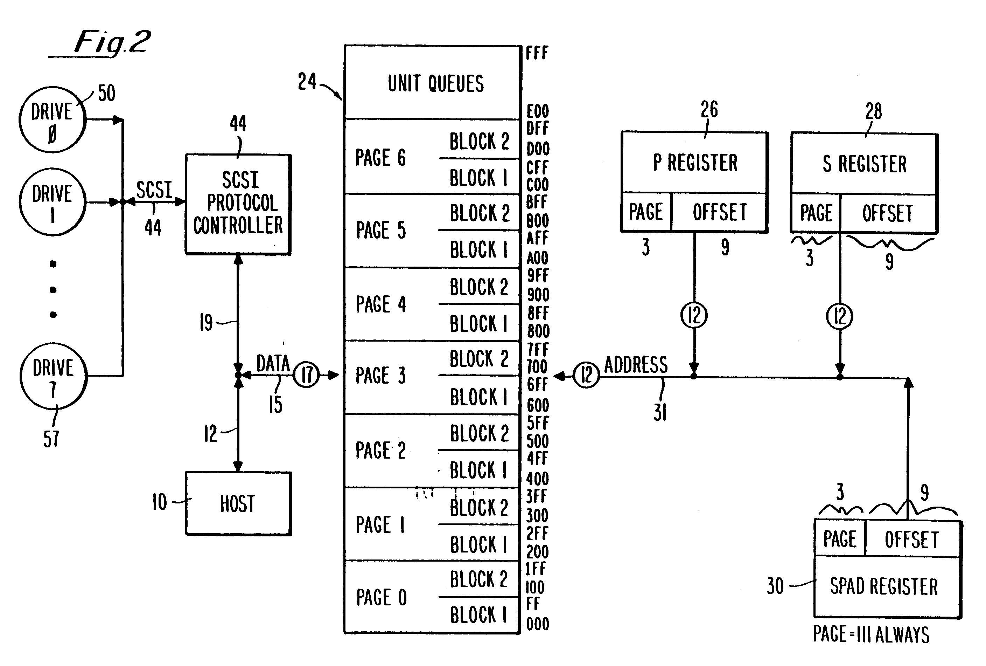

The data link processor used in the present disclosure uses a segmented data buffer memory. The DLP data buffer memory is divided into 15 parts as will be discussed in connection with FIG. 2. The most significant 512 words are used as a scratch pad to store "queue" information and unit-related information because of an inquiry from a target peripheral or from a sense command to a target peripheral. The "queue" section is the fifteenth part of the memory. The remaining buffer area is divided into seven pages of 512 words each and whereby each page can hold two separate blocks of 256 words each. These two blocks in any given page are reserved for data storage in connection with each target device or peripheral unit.

With respect to data transmission between the DLP 20 and the host 10, data will be transferred one buffer (512 bytes) at a time followed by a longitudinal parity word. The DLP 20 is "word-oriented" where one word equals sixteen bits plus parity.

On a "read" operation, the data link processor will send all available data in the buffer segments to the host computer system 10 and then disconnect itself from the host computer.

On a "write" operation, blocks of data are sent from the host computer 10 for temporary storage in the memory buffer 24, until the data is subsequently transferred to a selected peripheral unit.

DLP-Peripheral Terminal Communications: The data link processor 20 communicates with the selected peripheral device by setting up certain types of phases in the SCSI bus 44.
(i) Bus-Free Phase: This phase is used to indicate that no peripheral device is actively using the bus 44 and that the bus 44 is available for the DLP 20 to start the sequence. The DLP will detect a "bus-free" situation by monitoring control signals to determine when the bus 44 is freely available.
(ii) Arbitration Phase: During this phase, the DLP 20 gains control of the SCSI bus 44 in order to assume the role of an initiator.
(iii) Selection/Reselection Phase: During this phase, the DLP 20 selects a peripheral device for the purpose of initiating an operation. During "reselection", the peripheral device reconnects to the data link processor in order to continue an operation which was previously started by the data link processor but suspended by the target peripheral device.
(iv) Information Phase: The information phase may be considered to involve four parts as follows (but not necessarily in the order below):
   (a) Command Phase: During this phase, the DLP sends a command to be performed by the target peripheral. This command is made up of a six or a ten byte command block.
   (b) Data Phase: For a data-in phase, the DLP 20 receives data from the peripheral device. During the "data-out" phase, this period is used by the data link processor DLP, when data is to be sent to the target peripheral device.
   (c) Status Phase: During this phase, the DLP 20 receives the "status byte" from the target peripheral at the completion of an operation.
   (d) Message Phase: During the "message-in" phase, the DLP 20 receives a message byte from the target peripheral device. During a "message-out" phase, the DLP 20 sends a message byte to the target peripheral.

The protocol controller 40 monitors the SCSI bus 44 and acts as a slave to the connected peripheral unit to receive information identifying the particular phase involved. A phase sense register 40ₚᵣ holds this information and the protocol controller 40 provides an interrupt to the DLP 20 and informs the ALU 32 so that the proper program routine can be selected.

An example of a typically useful I/O descriptor instruction may be illustrated by use of the "read device buffer" instruction and then also the "write DLP buffer".

### Read Device Buffer:

This operation causes the DLP 20 transfer up to 65,636 bytes of data from the target peripheral to the host computer 10. The read device buffer is used in conjunction with the "write device" buffer command as a diagnostic function for testing the peripheral's data buffer memory and the SCSI bus 44's integrity.

Write DLP Buffer: The "write DLP buffer" operation allows the DLP to accept up to 14 buffers (each of 3,584 MLI words) of data by buffers from the host. The data storage area for this operation is identical to the area used in the "read buffer" operation and used by the DLP for buffering all data between the host and the target peripheral. This operation is intended as a fault isolation operation to verify the host system's communication with the data link processor.

Write Data Operation: This operation causes the data link processor to transfer data to the target peripheral to be written on the medium starting at the current medium position for a tape device. A disk device will have an address specified in the I/O descriptor. The length field specifies the amount of data to be written in bytes.

Read Data Operation: This operation will cause the DLP 20 to read the data from the target peripheral and transfer it to the host system. The amount of data to be transferred is specified (in bytes) in the length field of the I/O descriptor. Again a disk device will have an address in the I/O descriptor.

### DESCRIPTION OF PREFERRED EMBODIMENT

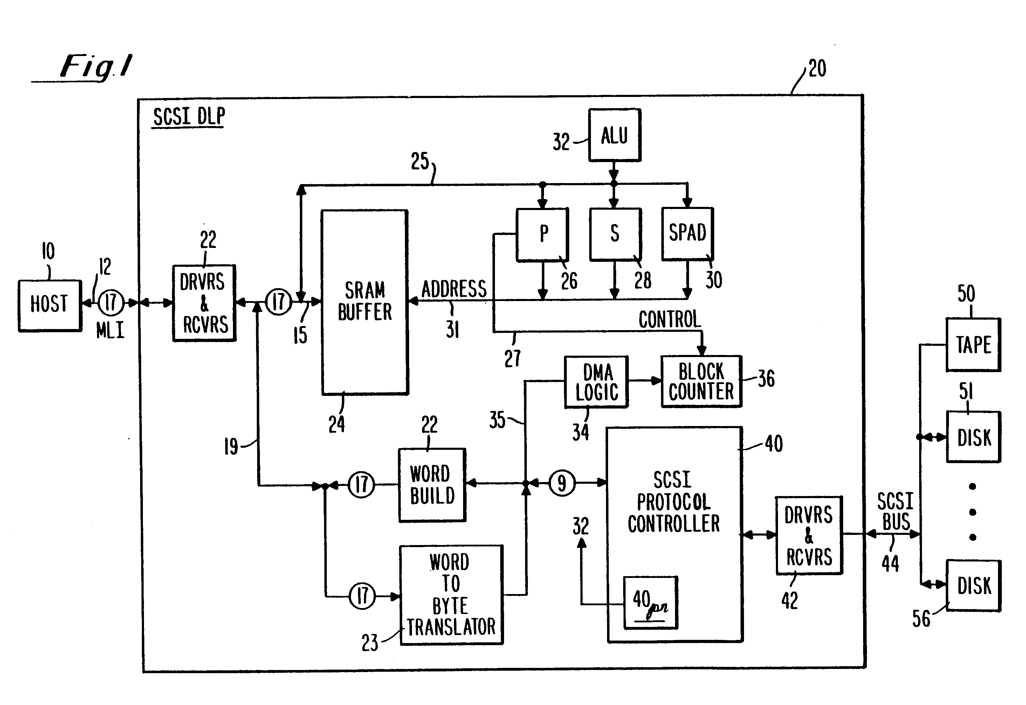

Referring to FIG. 1, this is seen a block diagram of the small computer systems interface - data link processor (SCSI-DLP) 20 which basically acts as a peripheral controller for the handling of data transfer operations between a host computer 10 and a set of terminal devices such as the tape peripheral 50 and the disk peripherals 51 through 56.

The data transfers between the host computer system 10 and the drivers and receivers 21 are effectuated through a bus 12 called the message level interface (MLI) bus which provides a specialized protocol compatible with Burroughs main host computers, such as the B5900, B6900, B7900 and A and V series systems.

The data transfers from the SCSI-DLP and the peripheral devices are accomplished by means of a bus 44 designated as the SCSI bus which transfers between the drivers and receivers 42 and the terminal peripheral devices 50 through 56.

Previously issued patents such as U.S. Patent 4,613,954 have disclosed the use and operation of data link processors and the use of peripheral address registers and the use of system address registers in order to address locations in a memory buffer whereby data being transferred can be temporarily stored.

For example, when data is being transferred from one of the peripheral devices 50-56, the data being transferred is temporarily placed in a buffer memory, such as the segmented RAM buffer 24 of FIG. 1. The location of storage for this data is determined by the peripheral address register such as 26 of FIG. 1 which provides the address locations into which the data is to be located.

Then, at the appropriate time, this data is accessed by the addresses supplied by the S register 28 so that the data can then be transferred through the drivers-receivers 21 and on to the host computer 10 by means of the MLI bus 12. This directional flow of data from a peripheral terminal to the main host computer is called a "read" operation. As such, the principal function of the S register 28 is to provide the address locations for the data being temporarily stored for subsequent transfer to the main host computer 10.

The S register 28 is used to provide address data for locations in the SRAM buffer 24 when data transfers are to occur between the host system 10 and the buffer 24. In this case, the S address register 28 provides the addresses of data to be accessed in the buffer 24 for subsequent transmittal to the host 10. Or likewise, when data is flowing from the host 10 toward the buffer 24, then the S register 28 will supply the appropriate address locations for this data to be placed in temporary storage.

When data is being transferred from the host computer to an eventual destination in one of the peripheral units 50-56, then this is called a "write" operation and data moves from the host to the peripheral unit, but meanwhile being temporarily stored in the memory buffer 24 under the locations specified by the S register 28.

Thus, as seen in FIG. 1, the SCSI-DLP 20 is seen functioning with the use of a segmented RAM (SRAM) buffer 24 which has its address locations specified by the P register 26 (peripheral address register), the S register 28 (system address register), and additionaly the SPAD register 30, which can be viewed as a scratch pad address register.

An arithmetic logic unit ALU 32 operates on a bus 25 in order to transmit and receive data to and from the memory buffer 24 while at the same time providing address data to the three registers --- the P register 26, the S register 28, and the SPAD register 30. These three registers then provide address data on the address bus 31 to the segmented RAM buffer 24.

Thus, in a "write" operation, the data is transmitted from the host 10 to temporarily reside in the RAM buffer 24. After this it can be retrieved and passed on to bus 19 and through the translation circuit 23 (word to byte) and thence to the protocol controller 40. The protocol controller 40 can then transmit the data on SCSI bus 44 onto the properly designated peripheral terminal such as the tape unit 50 or the disk units 51 through 56.

In the other direction when data is being transmitted from the peripheral units to the host computer system (read operation), then the data is passed on the bus SCSI bus 44 and then via the drivers and receivers 42 into the protocol controller 40 and then into the memory buffer 24. Before, however, being transferred to the memory buffer 24, the data passes through a "word build" circuit 22 which changes the data bytes received from the peripherals into "words" which can then be placed into the buffer 24 for subsequent transmittal to the host 10.

It will be seen on FIG. 1 that a block counter circuit 36 is used to count the blocks of data which are being transferred into the buffer 24 or out of the buffer 24. This block counter 36 is placed under the control of the P register 26, so that a count is made of the number of blocks of data that have been transferred either between the host system 10 and the memory buffer 24 or as between the memory buffer 24 and the selected peripheral terminal 50 through 56.

A DMA or direct memory access logic unit 34 is provided so that a block of data can be transferred rapidly into or out of the memory buffer 24 without the need for addressing each word location in the memory buffer 24 and placing a single word in it. Rather, a whole series of addresses can be sequentially addressed and a word of data sequentially placed in locations in the memory 24 through use of the P address register 26.

Referring to FIG. 2, there is shown a more detailed diagram of the segmented RAM buffer memory 24 and the major elements with which it cooperates.

As will be seen in FIG. 2, the segmented RAM 24 is split up into various sections, each of which is shown to have a Hex address shown at the right-hand side of the entire block unit 24.

There are seven segments in this buffer memory which are designed as page 0, page 1, page 2, etc through page 6 in order to provide seven separate memory sections which are designated as a "page". Additionally, there is an eighth segment which is entitled "unit queues" or scratch pad).

In order to address a particular location in the segmented buffer 24, an address is provided on bus 31. The address data can originate either from the P register 26, from the S register 28, or from the SPAD register 30 (Scratch Pad).

As seen in the registers 26, 28, and 30, each one of these registers has a 3-bit segment to denote the page followed by a 9-bit segment which determines the offset. The offset is the number of the location within the particular page involved. The scratch pad address register (SPAD) only addresses the unit queues (FIG. 2) since the page field is always 111 binary.

As seen in the memory buffer over a block 24, each one of the pages is further segmented into two blocks. These are designated as block 1 and block 2. In this particular embodiment, one block is the equivalent of 256 words of data.

The actual data which is placed into the RAM buffer 24 or which is removed from the RAM buffer 24 is handled by the bus 15 as shown in FIG. 2. Thus there may be data traveling from the host 10 on to the MLI bus 12 and then on to the bus 15 in order to enter data into the RAM buffer 24. Or, in the other direction, data may be retrieved from the RAM buffer 24 and pass on bus 15 and thence on bus 12 to the host 10.

Similarly, at the peripheral terminal end, data may be transmitted from any one of the peripheral terminals 50 through 57 over the SCSI bus 44 and through the protocol controller 40, thence on to bus 19 and then via bus 15 into the memory buffer 24. Likewise, in the other direction, data may be retrieved from the memory buffer 24 and be transmitted on bus 15, through bus 19 to the protocol controller 40 and thence over the SCSI bus 44 to the designated peripheral unit in the group of elements 50-57.

Referring to FIG. 3,there is seen an abbreviated block diagram of the system network. A host computer 10 is connected for control and data transfer to a multiplicity of peripheral terminals 50 through 56. A specialized message level interface protocol bus 12 connects the host computer to the small computer systems interface - data link processor 20. The data link processor basically provides a host control block 100, a memory control block 200, and a small computer systems interface control block 300 which connects to the peripheral terminals by means of a small computer systems interface bus 44.

The host control block 100 may be said to be composed of (referring to FIG. 1) bus 12, drivers-receivers 21, bus 15, and the memory buffer 24.

The memory control block 200, referring to FIG. 1, may be considered to be composed of the P register 26, the S register 28, the SPAD register 30, the address bus 31, the ALU 32 and the bus 25, and the block counter 36.

The SCSI interface control block 300 may be considered as being composed of the SCSI bus 44, the drivers-receivers 42, the protocol controller 40, the direct memory access logic 34, the bus 35 and the bus 19, as well as the word build unit 22 and word-to-byte translator 23.

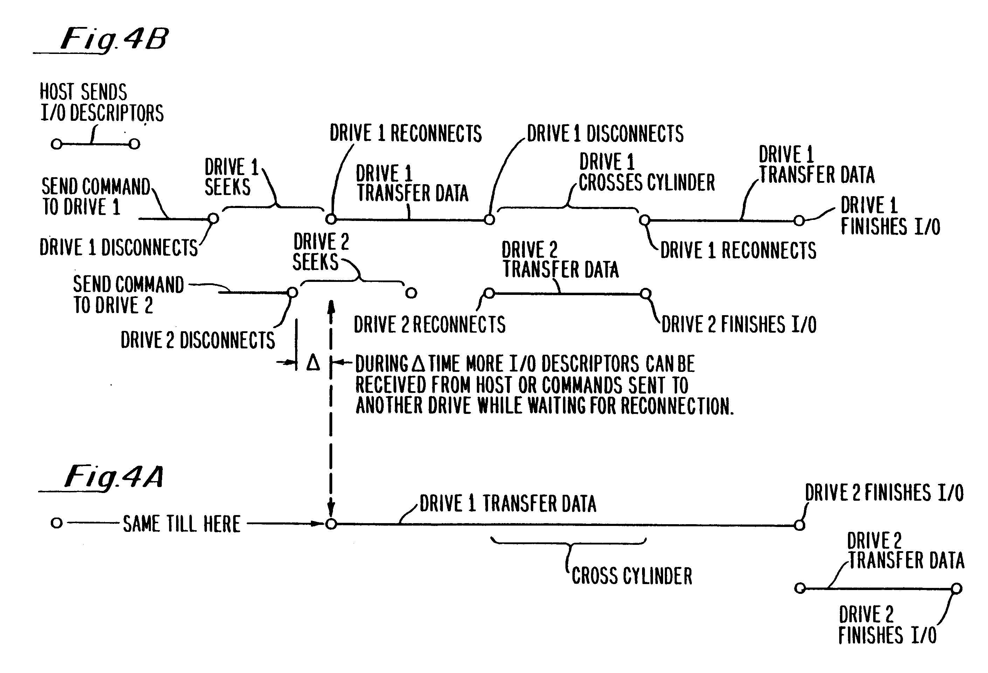

Referring to FIGS. 4A and 4B, there will be seen a time-log chart which will indicate the considerable difference between older methods of I/O processing and the newer method described in this disclosure.

Referring to FIG. 4A, there is seen a sequence of operations where past peripheral controllers (data link processors) operated in the sequential handling of data transfer operations. As will be seen in FIG. 4A, when there is a request for the disk drive 51 to transfer data to the host, the disk drive 51 will disconnect from the DLP 20 and will go into its "seek" mode where it may cross several cylinders of data in order to find the proper sector. After the proper sector of data is found, the disk drive 51 must then request a reconnection to the data link processor 20 and then wait until the connection is effectuated, after which it can then finish its I/O data transfer operation by transferring all the data from the requested sector over to the buffer memory of the data link processor. When this is done, it is only then possible for the disk drive 52 to be commanded to search for certain data and eventually transfer that data to the host. But again, the disk drive 52 must seek the required data from the appropriate sector and then wait for a reconnection to the data link processor, after which it can then continue to transfer all the data to the host by means of the buffer memory. Thus, the operation is a sequential one in which only one disk drive can be activated at any one given time.

With prior data link processors (I/O controllers), it was possible to have multiple disk drives "seeking" concurrently but they could not disconnect if they needed to cross another cylinder boundary or if they had to do housekeeping functions after data transfer operations started.

Now referring to FIG. 4B which will illustrate the sequential operations which can occur with the architectural configuration of the present disclosure. For example, the host will send an I/O descriptor (data transfer instruction) and will provide a command to the disk drive 51 to select a particular sector of data. The disk drive 51 will disconnect from the DLP and then will go through a period where the disk drive 51 seeks to acquire the data of the desired sector. Now, on the other hand, while the disk drive 51 is seeking its data, at the same time the host can send a data transfer command to the disk drive 52 after which the disk drive 52 will disconnect and seek its required data in the appropriate sector. This, however, is occurring at the same time that the activities of disk drive 51 are also occurring.

Now, to return to the cycle of the disk drive 51, it is seen that the disk drive 51 will reconnect to the data link processor 20 and the disk drive 51 will then transfer its data, after which it will disconnect itself from the data link processor 20. Meanwhile, as soon as the disk drive 51 disconnects from the DLP, it is now possible for the disk drive 52 to reconnect to the data link processor and transfer its data and complete its I/O cycle. However, simultaneously while disk drive 52 is transferring data, it can be seen that disk drive 51 is now able to cross cylinders in seeking a new sector of data and as soon as the disk drive 52 finishes its I/O operation, the disk drive 51 will reconnect to the data link processor and transfer its data to the data link processor 20.

It could be noted here that there are several simultaneous operations occurring as between the disk drive 51 and the disk drive 52. Likewise, the segmented buffer RAM memory 24 permits the use of up to seven simultaneous cycles of data transfer from the seven peripheral terminals. Thus, while any given disk drive is involved with its "seek" time (or any other housekeeping such as retries on bad sectors or relocating the bad sector or crossing a cylinder boundary), this period can profitably be used for other of the disk drives to receive commands or to transfer data back to the data link processor for eventual transfer to the host computer 10.

Thus, this juggling act permissibility makes the best use of the SCSI bus 44 since it is never idle and is continually being used for data transfer or command transfers to and from various ones of the multiple peripheral units.

Operational Functions: After the host system 10 has sent one or more I/O descriptors (instructions) to the SCSI-DLP 20, the DLP will issue a command to a selected peripheral unit from the group of terminals 50-57.

If, for example, the DLP 20 issues a "read" or "write" command to the disk drive 51, then the disk drive 51 will receive the command and then disconnect from the DLP 20 since the disk drive 51 recognizes that a period of time will be required to permit the "seek" to the requested sector in order to access the required data if the data is to be taken from the buffer 24 for transfer to the peripheral terminal 51.

Likewise, if data was to be transferred from the disk drive 51 to the DLP 20 and into the buffer 24, then again a "seek" time would be required in order to find the requested sector. When the disk drive 51 disconnects from the DLP 30, this frees up the SCSI bus 44.

It may be noted that the SCSI-DLP 20 saves the address of the S register 28 and the P register 26 by storing them in the unit queue (FIG. 2) area of the segmented buffer 24 while using the SPAD register 30 for effectuating the addressing of the segmented RAM buffer 24.

Since the disk drive 51 is gone "seeking" on the magnetic disk in order to get the required data, and since the SCSI bus 44 is free, then the DLP 20 (data link processor) may then issue another command, - for example, a command onto the disk drive 52.

The disk drive 52 then performs analogously to that of the disk drive 51. That is to say, it receives the command from the DLP, it disconnects itself from the data link processor, the data link processor 20 then saves the address of the system register 28 and the peripheral register 26, etc.

Thus, it is quite feasible to repeat this particular process time and time again until the seven disk drives are busy seeking data simultaneously.

Eventually, one of the disk drives will locate the requested sector of data and reconnect itself to the SCSI-DLP 20, for example, when disk drive 51 does this and reconnects to the DLP and the saved address values of the system register 28 and the peripheral register 26 are retrieved from the queue in buffer 24 using the SPAD address register 30 for the addressing.

After reconnecting to the DLP 20, the disk drive 51 begins transferring data into"page one" of the segmented buffer 24 via the SCSI protocol controller 40.

The peripheral address register P 26 is used to address the RAM buffer 24 on the basis of a direct memory access process. After 256 words (512 bytes) have been deposited into the page one, block one, then the SCSI-DLP begins transferring data from page one, block one (FIG. 2) where one block of data is equal to 256 words, --- the data being transferred to the host using the system register, S register 28, for the activity of addressing the RAM buffer 24.

Meanwhile, the disk drive 51 is still depositing data into the segment designated page one, but now into block two, which is the upper section for holding the 256 words of the first page. This occurs simultaneously with the transfer of data to the host computer 10.

The SPAD address register 30 frequently addresses the unit queue portion of the segmented memory buffer 24 in order to update the status of the I/O operation in progress.

The scratch pad address register, SPAD 30, operates to play a critical role in the data transfer process. Without the SPAD register 30, the S register 28 would have to be saved, and then loaded with a unit queue address, and then would have to update the data in the queue portion of the segmented RAM buffer memory 24 and then the S register 28 would have to be reloaded with the saved value again. Obviously, this would take a considerable period of time. Thus, without the third register, the SPAD 30, the complexity of the necessary code would increase and the system performance would decrease.

The disk drive 51 may need time to cross a "cylinder boundary" or else to perform some other time-consuming task. Therefore, the disk drive 51 disconnects from the SCSI-DLP 20, and the DLP 20 itself will save the present data pointers (the S register address and the P register address) in the queue portion of the segmented buffer memory 24 which is addressed by the SPAD 30 (scratch pad address register).

After the disconnection process takes place, the SCSI-DLP 20 is now available to receive more I/O descriptors from the host computer 10 or else to issue a command to another disk drive --- all the time while the DLP is waiting for the disk drive 51 or the disk drive 52 to reconnect itself to the DLP 20.

As another example, if the disk drive 52 has found its requested sector of data and then reconnects to the DLP (as disk drive 51 did earlier) and the disk drive 52 then begins data transfer just like disk drive 51 did, it should, however be understood that the disk drive 52 will be transferring its data into the segment known as page two of the segmented buffer memory 24.

Thus, it can be seen that there are two data transfers which are in process simultaneously and at the same time.

It can be noted here that the SCSI-DLP 20 did not have to flush out the contents of the page one section of its remaining data before allowing the transfer of data for the disk drive 52. This was done because the data was simply put into another page.

Thus, since there are at least seven segments or pages available in the segmented buffer memory 24, it is possible to expand this "simultaneity" of data transfer cycles for up to seven different disk drives. Thus, multiple numbers of data transfer cycles can be concurrently in various stages of execution for a plurality of I/O commands initiated by the host computer.

Now returning to the condition where the disk drive 51 is in the process of having data transferred and the disk drive 52 is also having data transferred, it will be seen that the disk drive 52 transfers all its data to the SCSI-DLP 20 via the segmented buffer memory 24 which in turn will enable the data to be transferred to the host computer 20.

After the disk drive 52 finishes up all of its data transfer operations, then the disk drive 51 will go into the previously described reconnection process and finish up its particular cycle of transferring its data to the host.

Previous designs of data link processors generally employed one contiguous buffer memory which was addressable by one or two hardware registers which were built from off-the-shelf parts. The inherent disadvantages with this approach is that any one I/O operation command transfer cycle must be completely finished before the next I/O transfer cycle can begin.

In order to circumvent this type of problem, the SCSI-DLP "segments" its particular buffer memory 24 (SRAM) into eight separate pages (segments) consisting of one kilobyte capacity per page.

This segmentation takes place in hardware through the use of programmed array logic units (PALs).

There are two memory address registers which are normally used. The S memory address register 28 is used to control and monitor data transfers from the host system into and out of the SRAM buffer memory 24 while the peripheral or P register 26 is used to control and monitor the transfer of data into and out of the buffer 24 when data transfer operations are involved with the peripheral units. Thus, either one of the memory address registers, S and P, can be used to address a single word within any one of the eight pages of memory. Thus, as seen in FIG. 2, the P register 26 has a page address segment consisting of three bits and an "offset" segment which gives the address of the word within the page. This offset portion consists of bits 0 through bit 8 and involves a total of nine bits. The page segment involves bits 9 through 11 and involves a total of three bits. Likewise, the S register 28 and the SPAD register 30 also have portions for the page segment and for the offset segment.

The lower nine bits of the address registers are incremented by the ALU 32 (of FIG. 1) to the next address by microcode or hardware, thus indicating that a data word has been transferred to the memory buffer 24 at the address prior to the incrementation of the offset segment.

The segment portion (page address) of the register does not increment, and the offset portion functions as a mod 512 counter.

If a transfer is desired to a different page, one must load the appropriate address register with the desired value and see that the entire register gets loaded with the new value. After this loading, the segment portion remains unchanged until the next load is encountered.

Complementing the S address register 28 and the P address register 26, there also exists a third or tertiary register designated as the scratch pad address register or SPAD 30. The SPAD register 30 only addresses the eighth page of memory (segment = 111). Operating just like the S register and the P register, the SPAD address register consists of an offset portion which functions just the same as those portions of the S and P registers. However, unlike the S and P register, the SPAD register 30 does not include a segment portion as part of its address.

There has been described herein an I/O controller for handling a multiple number of peripheral terminals in a network controlled by a type of host computer which can be used for small network systems. The I/O controller, or, as it is often called, a data link processor, permits multiple simultaneous data transfer cycles to be concurrently effected in a time-saving efficient fashion which substantially increases the throughput.

While a preferred embodiment has here been illustrated, it should be understood that the concept may have other implementations but which are encompassed by the following claims.

## Claims

1. A control system for permitting multiple simultaneous I/O data transfer cycles, in a peripheral controller, to be executed between a host computer (10) which initiates I/O data transfer commands, and multiple numbers (n) of peripheral terminal units (50-56), the combination characterised in that it includes;
(a) a segmented buffer memory means (24) having "n+1" addressable page segments and "m" addressable word locations in each of said page segments;
(b) memory address means for addressing page segments and word locations in said segmented buffer memory means (24), said memory address means including: (b1) a peripheral address register (26). controlled by an arithmetic logic unit (32) for selecting one of said "n+1" page segments and "m" word locations for data being transferred out of said buffer memory means (24) to a selected peripheral terminal unit (50-56) or for data being transferred from a selected peripheral terminal unit (50-56) to said buffer memory means (24); (b2) a system address register (28), controlled by said arithmetic logic unit (32), for selecting one of said "n+1" page segments and "m" word locations for data being transferred from said host computer (10) to said buffer memory means (24) or for data being transferred from said buffer memory means (24) to said host computer (10); (b3) a scratch pad address register (30) for addressing only the "n+1"th page segment and the "m" word locations therein;
(c) processor means (20) including said arithmetic logic unit (32) for controlling the execution of data transfers and for controlling said peripheral system (50-56), and for controlling said scratch pad address register (30).

2. The system according claim 1, characterised in that each of said addressable page segments holds two blocks of data.

3. The system according claim 2, characterised in that each block of data consists of 512 bytes.

4. The system according claim 1, characterised in that the "n+1"th page segment provides memory locations to store each incompleted I/O data transfer command and its present state of incompletion.

5. The system according claim 4, characterised in that said scratch pad register (30) selects locations in said "n+1"th page segment to record the said status of incompletion of each extant I/O command that was initiated.

6. The system according claim 1, characterised in that each of said "n" page segments is dedicated to one of said "n" peripheral units (50-56).

7. The system according claim 1, characterised in that it includes block counter means (36) controlled by said peripheral address register (26) for counting each 512 byte block of data transferred between said buffer memory means (24) and a selected peripheral unit (50-56).

8. The system according claim 1, characterised in that said processor means (20) includes means for scanning the "n+1"th page segment to find the status of each initiated data transfer command and to enable completion of each said initiated data transfer command at the next optimum time period available.

9. The system according claim 1, characterised in that said peripheral address register (26), said system address register (28) and said scratch pad address register (30) include a first register portion (3) for storing a page segment address for said buffer memory means (24) and a second register portion (9) for storing a specific word location address within the said page segment addressed by said first register portion.

10. The system according claim 1, characterised in that said processor means (20) includes means to store in said scratch pad address register (30) the number status of words transferred on any initiated data transfer command cycle and to subsequently access said number status in order to complete the entire data transfer cycle, at the next optimumly available time period, to its full completion.

## Patentansprüche

1. Ein Steuerungssystem, das mehrfache gleichzeitige Ein-/Ausgabe-Datenübertragungszyklen gestattet, in einer peripheren Steuereinheit, die zwischen einem Host-Computer 10, der die Ein-/Ausgabe-Datenübertragungsbefehle erzeugt und einer Vielzahl (n) von peripheren Datenstationen (50 bis 56) durchgeführt werden,
gekennzeichnet durch die Kombination folgender Merkmale:
(a) eine segmentierte Pufferspeichereinrichtung (24), die "n+1" adressierbare Seitensegmente und "m" adressierbare Wort-Adressbereiche in jedem von diesen Seitensegmenten hat;
(b) Speicher-Adressier-Vorrichtung zur Adressierung von Seitensegmenten und Wortadressen in dieser segmentierten Pufferspeichervorrichtung (24), wobei diese Adressier-Vorrichtung enthält:
(b1) ein peripheres Adressregister (26), gesteuert von einer arithmetischen Logikeinheit (32) zur Auswahl von einem jener "n+1" Seitensegmente und "m" Wort-Adressbereichen für Daten, die von jener Pufferspeichervorrichtung (24) zu einer ausgewählten peripheren Datenstation (50 bis 56) übertragen werden oder für Daten, die von einer ausgewählten peripheren Datenstation (50 bis 56) zu jener Pufferspeichervorrichtung (24) übertragen werden;
(b2) ein Systemadressregister (28), gesteuert von jener arithmetischen Logikeinheit (32), zur Auswahl von einem jener "n+1" Seitensegmente und "m" Wort-Adressbereichen für Daten, die von jenem Host-Computer (10) zu jener Pufferspeichervorrichtung (24) oder von jener Pufferspeichervorrichtung (24) zu jenem Host-Computer (10) übertragen werden;
(b3) ein Arbeitspuffer-Adressregister (30) zur Adressierung ausschließlich des "n+1"-Seitensegmentes und der "m"-Wort-Adressbereiche hierin;
(c) Prozessorvorrichtung (20) einschließlich jener arithmetischen Logikeinheit (32) zur Steuerung der Ausführung der Datenübertragungen und zur Steuerung jener peripheren Systeme (50 bis 56), und zur Steuerung von jenem Arbeitspuffer-Adressregister (30).

2. System nach Anspruch 1,
dadurch gekennzeichnet, daß jedes der adressierbaren Seitensegmente zwei Blöcke von Daten enthält.

3. System nach Anspruch 2,
dadurch gekennzeichnet, daß jeder Datenblock aus 512 Bytes besteht.

4. System nach Anspruch 1,
dadurch gekennzeichnet, daß das "n+1ste"-Seitensegment Adressbereiche zur Speicherung von jedem unvollendeten Ein-/Ausgabe-Datenübertragungsbefehl und seinem augenblicklichen Zustand der Nicht-Vollendung zur Verfügung stellt.

5. System nach Anspruch 4,
dadurch gekennzeichnet, daß das Arbeitspuffer-Register (30) Adressbereiche in jenem "n+1stem"-Seitensegment auswählt, um den Zustand der Nicht-Vollendung von jedem noch vorhandenen Ein-/Ausgabebefehl aufzuzeichnen.

6. System nach Anspruch 1,
dadurch gekennzeichnet, daß jede der "n" Seitensegmente jeweils einem der "n" peripheren Geräten (50 bis 56) zugeordnet ist.

7. System nach Anspruch 1,
dadurch gekennzeichnet, daß es eine Blockzählvorrichtung (36) enthält, die von dem peripheren Adressregister (26) gesteuert wird und zum Zählen von jedem 512 Byte großen Datenblock dient, der zwischen der Pufferspeichervorrichtung (24) und einem ausgewählten peripheren Gerät (50 bis 56) übertragen wird.

8. System nach Anspruch 1,
dadurch gekennzeichnet, daß jene Prozessorvorrichtung (20) Vorrichtungen zum Einlesen des "n+1sten" Seitensegmentes enthält, um den Status von jedem abgegebenen Datenübertragungsbefehl zu bestimmen und die Vollendung von dem abgegebenen Datenübertragungsbefehl zu der nächsten optimalen zur Verfügung stehenden Zeitperiode zu ermöglichen.

9. System nach Anspruch 1,
dadurch gekennzeichnet, daß das periphere Adressregister (26), das System-Adressregister (28) und das Arbeitspuffer-Adressregister (30) ein erstes Registerteil (3) zur Speicherung einer Seitensegment-Adresse für die Pufferspeichervorrichtung (24) und ein zweites Registerteil (9) zur Speicherung eines spezifischen Wort-Adressbereiches in dem Seitensegment enthält, das von dem ersten Registerteil adressiert ist.

10. System nach Anspruch 1,
dadurch gekennzeichnet, daß die Prozessorvorrichtung (20) Vorrichtungen in dem Arbeitspuffer-Adressregister (30) zur Speicherung der Anzahl von Worten enthält, die aufgrund irgendeines Datenübertragungs-Befehlszyklusses übertragen wurden, und um nachfolgend auf jene Anzahl zuzugreifen, um den gesamten Datenübertragungszyklus in der nächsten optimalen verfügbaren Zeitperiode vollständig abzuschließen.

## Revendications

1. Système de commande permettant l'exécution de multiples cycles simultanés d'E/S de transfert de données dans une unité de commande de périphériques entre un ordinateur central (10) générant des commandes d'E/S de transfert de données et un grand nombre (n) d'unités périphériques de terminal (50 à 56), cet ensemble étant caractérisé en ce qu'il comprend :
- un moyen de mémoire de tampon segmentée (24) possédant "n+1" segments de page adressables et "m" zones de mot adressables dans chacun desdits segments de page;
- un moyen d'adressage de mémoire pour adresser des segments de page et des zones de mot dans ledit moyen de mémoire de tampon segmentée (24), ledit moyen d'adressage de mémoire comprenant :
- un registre d'adressage de périphérique (26) commande par une unité logique arithmétique (32) pour la sélection d'un desdits "n+1" segments de page et "m" zones de mot pour le transfert en sortie des données dudit moyen de mémoire de tampon (24) vers une unité périphérique de terminal choisie (50 à 56) ou pour le transfert des données à partir d'une unité périphérique de terminal choisie (50 à 56) vers ledit moyen de mémoire de tampon (24);
- un registre d'adressage du système (28) commandé par ladite unité logique arithmétique (32), pour la sélection d'un desdits "n+1" segments de page et "m" zones de mot pour le transfert des données dudit ordinateur central (10) vers ledit moyen de mémoire de tampon (24) ou pour le transfert de données dudit moyen de mémoire de tampon (24) vers ledit ordinateur central (10);
- un registre d'adressage de mémoire de travail (30) pour n'adresser que le "n+1"^{ième} segment de page et les "m" zones de mot;
- un moyen de processeur (20) comprenant ladite unité logique arithmétique (32) pour la commande de l'exécution des transferts de données et pour la commande dudit système de périphériques (50 à 56) ainsi que pour la commande dudit registre d'adressage de mémoire de travail (30).

2. Système selon la revendication 1, caractérisé en ce que chacun desdits segments de page adressables conserve deux blocs de données.

3. Système selon la revendication 2, caractérisé en ce que chaque blocs de données est constitués de 512 octets.

4. Système selon la revendication 1, caractérisé en ce que le "n+1"^{ième} segment de page présente des zones de mémoire pour stocker chaque commande de transfert de données d'E/S incomplet et son présent état de non achèvement.

5. Système selon la revendication 4, caractérisé en ce que ledit registre de mémoire de travail (30) choisi des zones dans ledit "n+1"^{ième} segment de page pour enregistrer ledit état de non achèvement de chaque commande d'E/S conservée qui a été générée.

6. Système selon la revendication 1, caractérisé en ce que chacun desdits "n" segments de page est dédié auxdites "n" unités périphériques (50 à 56).

7. Système selon la revendication 1, caractérisé en ce qu'il comprend un moyen de compteur de bloc (36) commandé par ledit registre d'adressage de périphérique (26) pour le comptage de chaque bloc de données de 512 octets transféré entre ledit moyen de mémoire de tampon (24) et une unité périphérique choisie (50 à 56).

8. Système selon la revendication 1, caractérisé en ce que ledit moyen de processeur (20) comprend un moyen pour le balayage du "n+1"^{ième} segment de page pour trouver le statut de chaque commande générée de transfert de données et pour permettre l'achèvement de chaque dite commande généré de transfert de données à la période de temps optimale suivante disponible.

9. Système selon la revendication 1, caractérisé en ce que ledit registre d'adressage de périphérique (26), ledit registre d'adressage du système (28) et ledit registre d'adressage de mémoire de travail (30) comprennent une première partie de registre (3) pour le stockage d'une adresse de segment de page pour ledit moyen de mémoire de tampon (24) et une seconde partie de registre (9) pour le stockage d'une adresse spécifique de zone de mot dans ledit segment de page adressé par ladite première partie de registre.

10. Système selon la revendication 1, caractérisé en ce que ledit moyen de processeur (20) comprend un moyen pour le stockage dans ledit registre d'adressage de mémoire de travail (30) du statut du nombre de mots transférés lors d'un quelconque cycle amorcé de commande de transfert de données et pour un accès suivant audit statut de nombre de façon à achever tout le cycle de transfert de données, à la période de temps optimale suivante disponible, jusqu'à son achèvement.
